# EUROPEAN PATENT SPECIFICATION

(11) **EP 4 206 257 B1**
(45) Date of publication and mention of the grant of the patent: **30.07.2025**
(21) Application number: 21218097.0
(22) Date of filing: 29.12.2021
(51) Int. Cl.: C08G 63/127

(54) **SEMIAROMATIC POLYESTER, AND PREPARATION METHOD AND APPLICATION THEREOF**
HALBAROMATISCHER POLYESTER, VERFAHREN ZU SEINER HERSTELLUNG UND SEINE VERWENDUNG
POLYESTER SEMI-AROMATIQUE ET SON PROCÉDÉ DE PRÉPARATION ET SON APPLICATION

(30) Priority: 31.12.2020 CN 202011615724
(43) Date of publication of application: 05.07.2023
(73) Proprietor: Jiangsu Kingfa Sci. & Tech. Advanced Materials Co., Ltd., Suzhou, Jiangsu 215300 (CN)
(72) Inventor: ZHANG, Chuanhui, Suzhou, 215300 (CN); HUANG, Xianbo, Suzhou, 215300 (CN); YE, Nanbiao, Suzhou, 215300 (CN); ZENG, Xiangbin, Suzhou, 215300 (CN); LU, Changli, Suzhou, 215300 (CN); CAI, Tongmin, Suhou, 215300 (CN)
(74) Representative: dompatent von Kreisler Selting Werner - Partnerschaft von Patent- und Rechtsanwälten mbB

(56) References cited:
- CN-B- 112 280 026
- US-B2- 8 614 280

## Description

### FIELD OF TECHNOLOGY

The present invention relates to the field of biodegradable polyesters, and in particular to a semiaromatic polyester with a specific segment length, and a preparation method and application thereof.

### BACKGROUND

Thermoplastic aromatic polyesters currently widely used in industries and our daily life are easy to process and low in price, featuring excellent thermostability and mechanical properties. For example, polyethylene terephthalate (PET) and polybutylene terephthalate (PBT) have been widely used in the manufacturing of fibers, films and containers. However, these aromatic polyesters are difficult to degrade after use and disposal, and no significant direct microbial degradation of aromatic polyesters, such as PET and PBT, has been observed so far. In order to combine the excellent properties of aromatic polyesters, those skilled in the art have been dedicated since the 1980s to the research on synthesis of aliphatic-aromatic copolyesters, i.e., introducing aromatic segments into aliphatic polyesters, which ensures not only the excellent properties of aromatic polyesters but biodegradability of the copolyesters.

Biodegradable aliphatic-aromatic copolyesters can be prepared by aliphatic diacids or derivatives thereof, aliphatic diols, and aromatic diacids or derivatives thereof. A representative copolyester is Ecoflex manufactured by the German company BASF, using 1,6-adipic acid (AA), 1,4-butanediol (BDO) and terephthalic acid as raw materials. The polymerization process thereof, as disclosed in the Chinese patent CN102007159A, mainly comprises 4 steps: i) in a first step, all diacids and diols are mixed, and the mixture with the entire amount of or with a portion of a catalyst is continuously esterified or, transesterified; ii) in a second step, the transesterification or, esterification product obtained in i) is continuously precondensed to an intrinsic viscosity of from 20 to 70 cm³/g according to DIN 53728; iii) in a third step, the product obtained in ii) is continuously polycondensed to an intrinsic viscosity of from 60 to 170 cm³/g according to DIN 53728; and iv) in a fourth step, the product obtained in iii) is reacted continuously with a chain extender in a polyaddition reaction to an intrinsic viscosity of from 150 to 320 cm³/g according to DIN 53728. The polyesters obtained by this method have relatively low MVR (melt volume rate) and hence excellent processability. They also have a very low acid number, which in turn results in good hydrolysis resistance.

At home, a biodegradable aliphatic-aromatic copolyester, poly(butylene-adipate-co-terephthalate) (PBAT) was prepared by Wang Xiaohui et al. using terephthalic acid (PTA), adipic acid (AA) and 1,4-butanediol (BG) as basic raw materials, through melt polycondensation method with developed novel catalysts (Study on new process of synthesis and properties of biodegradable aliphatic-aromatic copolyesters, Wang Xiaohui, PhD thesis, Beijing University of Chemical Technology, 2011).

However, the properties of semiaromatic polyesters are not yet well studied in the prior art to achieve a good balance between degradation rate and mechanical properties thereof.

### SUMMARY

In view of the drawbacks in the prior art, it is an object of the present invention to provide a semiaromatic polyester, which, with a specific segment length and carboxyl group content, offers a balance between degradation rate and mechanical properties.

Another object of the present invention is to provide a preparation method of the above-mentioned semiaromatic polyester.

The above-mentioned objects of the present invention are achieved by the following technical schemes:
a semiaromatic polyester including derivatives formed by the following components:
a first component A, based on a total molar amount of the first component A, including:
   a1) from 40 to 60 mol% of at least one aliphatic dicarboxylic acid or ester derivatives thereof or anhydride derivatives thereof,
   a2) from 40 to 60 mol% of at least one aromatic dicarboxylic acid or ester derivatives thereof or anhydride derivatives thereof, and
   a3) from 0 to 5 mol% of a compound containing sulfonate groups;
a second component B with at least equimolar amount with respect to the first component A, including diols having from 2 to 12 carbon atoms; and
a third component C, based on a total molar amount of the first component A, being one or more selected from the following:
   c1) from 0 to 5 mol% of a compound containing at least 3 hydroxy groups,
   c2) from 0 to 5 mol% of a dihydroxy compound containing an ether group,
   c3) from 0 to 25 mol% of a hydroxycarboxylic acid or cyclic derivatives thereof, and
   c4) from 0 to 25 mol% of an amino alkanol having from 2 to 12 carbon atoms, or an amino cycloalkanol having from 2 to 12 carbon atoms,
   c5) from 0 to 25 mol% of a diamine having from 1 to 12 carbon atoms, and
   c6) from 0 to 15 mol% of an aminocarboxylic acid compound,
wherein the percentage of at least one of components c1) to c6) is not 0, and a total of the molar percentages of c1) to c6) is 100%;
wherein, the average segment length of a repeating unit Ba2, derived from the second component B and the component a2 of the semiaromatic polyester, is from 1.85 to 2.25 as calculated using ¹HNMR, and the carboxyl group content of the semiaromatic polyester is from 5 to 60 mmol/kg.

Ba2 is an esterification product obtained from esterification of the second component B with a2 of the first component A. The average segment length of Ba2 is the segment length of the aromatic polyester in the semiaromatic polyester. During synthesis of polyesters, many factors, such as the variance in structures or ratios of raw material monomers and the preparation process, may affect and result in significant difference in the molecular structures of the final polyesters obtained in the preparation. It was found through studies for the present invention that, the average segment length of Ba2 is closely related to the mechanical properties and degradation rate of semiaromatic polyesters. A too large average segment length of Ba2 will result in a relatively low degradation rate such that it is difficult for the polyesters to degrade; whereas if the average segment length of Ba2 is too small, the degradation rate will be too high.

As another important indicator for degradable polyesters, the carboxyl group content can significantly affect the thermostability and even shelf life of degradable polyesters. The shelf life refers to the period when the performance of a degradable polyester remain stable in general after production thereof or after obtaining the finished product. The higher the carboxyl group content, the faster the performance degradation rate of degradable polyesters. Both inappropriate reaction time and inappropriate addition of the catalyst can lead to a different carboxyl group content.

Surprisingly, it was found by the present invention that, by controlling the average segment length of Ba2 to from 1.85 to 2.25, and controlling the carboxyl group content to a range of between 5 and 60 mmol/kg, the obtained semiaromatic polyester can have a balance between degradation rate and mechanical properties, with a 30-day weight retention being controlled to from 45 to 70%.

As a further preferable technical scheme of the present invention, the average segment length of the repeating unit Ba2 is preferably from 1.87 to 2.0, and the carboxyl group content is preferably from 10 to 35 mmol/kg. Herein, the average segment length of the repeating unit Ba2 and the carboxyl group content of the semiaromatic polyester are contained within the preferable range, and the 30-day weight retention may be contained to from 50 to 60%.

Preferably, the semiaromatic polyester has a viscosity of from 150 to 350 ml/g, measured in a phenol/o-dichlorobenzene solution in a weight ratio of 1:1 and in a water bath kept at 25±0.05°C in accordance with GB/T 17931-1999.

The content of terephthalic acid also has a significant effect on the degradability of the semiaromatic polyester. The higher the content of terephthalic acid, the lower the degradation rate of the polyester. The degradation rate of polyesters will become relatively small when the content of terephthalic acid exceeds 60 mol%. Preferably, the molar amount of the a2 is from 45 to 50 mol% of the total molar amount of the first component A.

In the present invention, the aliphatic dicarboxylic acid of a1 may be either linear or branched, generally having from 2 to 40 carbon atoms, and further preferably containing from 2 to 30 carbon atoms, and even further preferably containing from 4 to 14 carbon atoms. Additionally, the aliphatic dicarboxylic acids of the present invention may also be alicyclic dicarboxylic acids, which generally have from 7 to 10 carbon atoms, and preferably have 8 carbon atoms in particular.

By way of example, the aliphatic dicarboxylic acid may be malonic acid, succinic acid, glutaric acid, 2-methylglutaric acid, 3-methylglutaric acid, adipic acid, pimelic acid, suberic acid, azelaic acid, sebacic acid, undecanedioic acid, dodecanedioic acid, tridecanedioic acid, tetradecanedioic acid, fumaric acid, 2,2-dimethylglutaric acid, suberic acid, dimer fatty acid (such as Empol1061 from Cognis), 1,3-cyclopentanedicarboxylic acid, 1,4-cyclohexanedicarboxylic acid, 1,3-cyclohexanedicarboxylic acid, diglycolic acid, itaconic acid, maleic acid, maleic anhydride, and 2,5-norbornanedicarboxylic acid.

Meanwhile, ester derivatives formed by the above-mentioned aliphatic dicarboxylic acids are also within the scope of a1, preferably, the ester derivatives of the aliphatic dicarboxylic acids are selected from dialkyl esters formed by aliphatic dicarboxylic acids. Examples of the dialkyl esters are dimethyl, diethyl, di-n-propyl, diisopropyl, di-n-butyl, diisobutyl, di-tert-butyl, di-n-pentyl, diisopentyl or di-n-hexylesters.

Meanwhile, anhydride derivatives of the above-mentioned aliphatic dicarboxylic acids are also within the scope of a1.

The aliphatic dicarboxylic acids or ester derivatives thereof or anhydride derivatives thereof may be used herein individually or in the form of a mixture composed of two or more of these.

Further preferably, the aliphatic dicarboxylic acids or ester derivatives thereof or anhydride derivatives thereof are selected from a group consisting of succinic acid, adipic acid, azelaic acid, sebacic acid, tridecanedioic acid, and respective ester derivatives and anhydride derivatives formed thereby; and further preferably selected from a group consisting of succinic acid, adipic acid, sebacic acid, and respective ester derivatives and anhydride derivatives formed thereby. It is particularly preferable to use adipic acid or its ester derivatives, for example its alkyl ester derivatives or a mixture thereof.

The succinic acid, azelaic acid, sebacic acid, and tridecanedioic acid have the additional advantage of being available in the form of renewable raw materials.

Sebacic acid or a mixture of sebacic acid with adipic acid is preferably used as aliphatic dicarboxylic acid when producing polymer mixtures having "hard" or "brittle" components, such as polyhydroxybutyrate or in particular polylactide. Succinic acid or a mixture of succinic acid with adipic acid is preferably used as aliphatic dicarboxylic acid when producing polymer mixtures with "soft" or "tough" components, such as polyhydroxybutyrate-co-valerate or poly-3-hydroxybutyrate-co-4-hydroxybutyrate.

In the present invention, the aromatic dicarboxylic acids of a2 preferably have from 8 to 20 carbon atoms, and further preferably have from 8 to 12 carbon atoms. By way of example, the aromatic dicarboxylic acids are selected from a group consisting of terephthalic acid, isophthalic acid, 2,6-naphthoic acid and 1,5-naphtholic acid, and also ester derivatives formed thereby. Preferably, the ester derivatives of the aromatic dicarboxylic acids are selected from dialkyl ester derivatives formed by aromatic dicarboxylic acids. Examples of the dialkyl ester derivative are dimethyl, diethyl, di-n-propyl, diisopropyl, di-n-butyl, diisobutyl, di-tert-butyl, di-n-pentyl, diisopentyl or din-hexylesters.

The aromatic dicarboxylic acids or ester derivatives thereof or anhydride derivatives thereof may be used herein individually or in the form of a mixture composed of two or more of these. Particularly preferably, the aromatic dicarboxylic acids or ester derivatives thereof are selected from a group consisting of terephthalic acid and ester derivatives formed thereby, e.g., dimethyl terephthalate.

The compound herein including sulfonate groups in the component a3 is preferably one of the alkali metal salts or alkaline earth metal salts of a dicarboxylic acid including sulfonate groups or ester derivatives thereof, preferably alkali metal salts of 5-sulfoisophthalic acid or a mixture of these, particularly preferably the sodium salt.

Preferably, the second component B may be branched or linear alkanediols preferably those having from 2 to 12 carbon atoms, further preferably from 4 to 6 carbon atoms.

In particular, the diols are preferably selected from a group consisting of ethylene glycol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol (neopentyl glycol), 1,2-cyclopentanediol, 1,3-cyclopentanediol, 1,4-cyclohexanediol, 1,2-cyclohexanedimethanol, 1,3-cyclohexanedimethanol, 1,4-cyclohexanedimethanol, 2,2,4,4-tetramethyl-1,3-cyclobutanediol, 2-ethyl-2-butyl-1,3-propanediol, 2-ethyl-2-isobutyl-1,3-propanediol and 2,2,4-trimethyl-1,6-hexanediol; and further preferably selected from a group consisting of ethylene glycol, 1,3-propanediol, 1,4-butanediol, 2,2-dimethyl-1,3-propanediol (neopentyl glycol), cyclopentanediol, 1,4-cyclohexanediol, 1,2-cyclohexanedimethanol, 1,3-cyclohexanedimethanol, 1,4-cyclohexanedimethanol and 2,2,4,4-tetramethyl-1,3-cyclobutanediol.

Particular preference is given to 1,4-butanediol as the second component B when a1 of the first component A is adipic acid. When a1 of the first component A is sebacic acid, 1,3-propanediol is used as the second component B. 1,3-propanediol has additional advantage of a bio-based raw material.

It is also possible to use mixtures of different diols.

The addition of the third component C provides a branched structure for the semiaromatic polyester, thus improving its flowability. The viscosity (melt viscosity) decreases after the addition of the third component C.

In the third component C, the compound having at least 3 hydroxy groups (c1) preferably has from 3 to 6 hydroxy groups, and is preferably selected from a group consisting of tartaric acid, citric acid, malic acid, trimethylolpropane, trimethylolethane, pentaerythritol, polyether triols and glycerol; and further preference is given to trimethylolpropane, pentaerythritol or glycerol.

In the third component C, the dihydroxy compound containing an ether group (c2) is preferably selected from a group consisting of diethylene glycol, triethylene glycol, polyethylene glycol, polypropylene glycol and polytetrahydrofuran (polyTHF); and particularly preferably diethylene glycol, triethylene glycol and polyethylene glycol. Mixtures of different dihydroxy compounds having an ether group may be used, or else, polyethylene glycol which includes a propylidene unit may be used. The molar mass (Mn) of the polyethylene glycol is generally within the range from 250 to 8,000 g/mol, preferably from 600 to 3,000 g/mol.

In the third component C, the hydroxycarboxylic acid or cyclic derivatives thereof (c3) is preferably selected from a group consisting of glycolic acid, D-lactic acid, L-lactic acid, D,L-lactic acid, 6-hydroxyhexanoic acid, glycolide (1,4-dioxane-2,5-dione), D- or L-dilactide (3,6-dimethyl-1,4-dioxane-2,5-dione), p-hydroxybenzoic acid, their oligomers and polymers, such as 3-polyhydroxybutyric acid, polyhydroxyvaleric acid, polylactide (for example polylactide obtained in the form of NatureWorks (Cargill)), or else a mixture of 3-polyhydroxybutyric acid and polyhydroxyvaleric acid (the latter may be obtained as Biopol from Zeneca).

In the third component C, the amino alkanol having from 2 to 12 carbon atoms, or the amino cycloalkanol having from 2 to 12 carbon atoms (c4) is preferably selected from a group consisting of amino-C2-C6 alkanol or amino-C5-C6 cycloalkanol; particularly it may be 2-aminoethanol, 3-aminopropanol, 4-aminobutanol, 5-aminopentanol, 6-aminohexanol, or 4-aminomethylcyclohexane-methanol and the like, further preferably being aminocyclopentanol and/or aminocyclohexanol.

In the third component C, the diamine having from 1 to 12 carbon atoms (c5) is preferably selected from diamino-C4-C6 alkanes, such as 1,4-diaminobutane, 1,5-diaminopentane or 1,6-diaminohexane (hexamethylenediamine, "HMD").

In the third component C, the aminocarboxylic acid compound (c6) is preferably an aminocarboxylic acid selected from a group consisting of caprolactam, 1,6-aminocaproic acid, laurolactam, 1,12-aminolauric acid, and 1,11-aminoundecanoic acid.

Preferably, the molar amount of the third component C is from 0.01 to 4 mol%, based on the total molar amount of the first component A.

Preferably, the third component C is glycerol, pentaerythritol or trimethylolpropane.

Preferably, the semiaromatic polyester further includes a fourth component D, the fourth component D being a chain extender.

The chain extender is one or a mixture of more selected from a group consisting of isocyanates, isocyanurates, peroxides, epoxides, oxazolines, oxazines, lactams, carbodiimides and polycarbodiimides, which have two or more functional groups.

The isocyanates having two or more functional groups may be aromatic or aliphatic isocyanates, preferably aromatic or aliphatic diisocyanates. Preferably, the aromatic diisocyanate is tolylene 2,4-diisocyanate, tolylene 2,6-diisocyanate, diphenylmethane 2,2'-diisocyanate, diphenylmethane 2,4'-diisocyanate, diphenylmethane 4,4'-diisocyanate, naphthalene 1,5-diisocyanate, or xylene diisocyanate.

Further preferably, the aromatic diisocyanate is diphenylmethane 2,2'-diisocyanate, diphenylmethane 2,4'-diisocyanate or diphenylmethane 4,4'-diisocyanate.

The isocyanate having 2 or more functional groups that can also be used is tri(4-isocyanato-phenyl)methane having three rings.

Preferably, the aliphatic diisocyanate is preferably any of the linear or branched alkylene diisocyanates or cycloalkylene diisocyanates having from 2 to 20 carbon atoms, preferably from 3 to 12 carbon atoms. The aliphatic diisocyanate may be hexamethylene 1,6-diisocyanate, isophorone diisocyanate, or methylenebis(4-isocyanatocyclohexane). Particularly preferred aliphatic diisocyanates are hexamethylene 1,6-diisocyanate or isophorone diisocyanate.

Preferably, the isocyanurates having 2 or more functional groups are the aliphatic isocyanurates that derive from alkylene diisocyanates or from cycloalkylene diisocyanates, where these have from 2 to 20 carbon atoms, preferably from 3 to 12 carbon atoms, examples being isophorone diisocyanate or methylenebis(4-isocyanatocyclohexane). The alkylene diisocyanates can be either linear or branched compounds. Particular preference is given to isocyanurates based on n-hexamethylene diisocyanate, examples being cyclic trimers, pentamers, or higher oligomers of hexamethylene 1,6-diisocyanate.

Preferably, the peroxides having 2 or more functional groups are: benzoyl peroxide, 1,1-bis(tert-butylperoxy)-3,3,5-trimethylcyclohexane, 1,1-bis(tert-butylperoxy)methylcyclododecane, n-butyl 4,4-bis(butylperoxy)valerate, dicumyl peroxide, tert-butyl peroxybenzoate, dibutyl peroxide, α,α-bis(tert-butylperoxy)diisopropylbenzene, 2,5-dimethyl-2,5-di(tert-butylperoxy)hexane, 2,5-dimethyl-2,5-di(tert-butylperoxy)hex-3-yne, and tert-butylperoxycumene.

Preferably, the epoxides having 2 or more functional groups are: hydroquinone, diglycidyl ether, resorcinol diglycidyl ether, 1,6-hexanediol diglycidyl ether, and hydrogenated bisphenol A diglycidyl ether, diglycidyl terephthalate, diglycidyl tetrahydrophthalate, diglycidyl hexahydrophthalate, dimethyldiglycidyl phthalate, phenylene diglycidyl ether, ethylene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentylglycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, and polybutylene glycol diglycidyl ether.

Preferably epoxides having 2 or more functional groups also include a copolymer including epoxy groups and based on styrene, acrylic ester and/or methacrylic ester. The units bearing epoxy groups are preferably glycidyl (meth)acrylates. Compounds that have proven advantageous are copolymers having a proportion of more than 20% by weight, particularly preferably more than 30% by weight, and with particular preference more than 50% by weight, of glycidyl methacrylate in the copolymer. The epoxy equivalent weight (EEW) in these polymers is preferably from 150 to 3,000 g/equivalent, particularly preferably from 200 to 500 g/equivalent. The average molecular weight (weight average) Mw of the polymers is preferably from 2,000 to 25,000, in particular from 3,000 to 8,000. The average molecular weight (number average) Mn of the polymers is preferably from 400 to 6,000, in particular from 1,000 to 4,000. The polydispersity (Q=Mw/Mn) is preferably from 1.5 to 5.

The oxazolines and oxazines having 2 or more functional groups are preferably bisoxazolines or bisoxazines in which the bridging member is a single bond, a (CH2)_{z}-alkylene group; where z=2, 3, or 4, examples being methylene, ethane-1,2-diyl, propane-1,3-diyl or propane-1,2-diyl or a phenylene group. Particularly, the bisoxazolines are 2,2'-bis(2-oxazoline), bis(2-oxazolinyl)methane, 1,2-bis(2-oxazolinyl)ethane, 1,3-bis(2-oxazolinyl)propane or 1,4-bis(2-oxazolinyl)butane, 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(4-methyl-2-oxazoline), 2,2'-p-phenylenebis(4,4'-dimethyl-2-oxazoline), 2,2'-m-phenylenebis(4-methyl-2-oxazoline), 2,2'-m-phenylenebis(4,4'-dimethyl-2-oxazoline), 2,2-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4'-dimethyl-2-oxazoline), 2,2'-9,9'-diphenoxyethanebis(2-oxazoline), 2,2'-cyclohexylenebis(2-oxazoline), and 2,2'-diphenylenebis(2-oxazoline).

Further preferred bisoxazolines are 1,4-bis(2-oxazolinyl)benzene, 1,2-bis(2-oxazolinyl)benzene, or 1,3-bis(2-oxazolinyl)benzene.

Particularly, bisoxazines are 2,2'-bis(2-oxazine), bis(2-oxazinyl)methane, 1,2-bis(2-oxazinyl)ethane, 1,3-bis(2-oxazinyl)propane, 1,4-bis(2-oxazinyl)butane, 1,4-bis(2-oxazinyl)benzene, 1,2-bis(2-oxazinyl)benzene, or 1,3-bis(2-oxazinyl)-benzene.

The carbodiimides or polycarbodiimides are preferably: N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylenebisdi-o-tolylcarbodiimide, p-phenylenebisdicyclohexylcarbodiimide, hexamethylenebisdicyclohexylcarbodiimide, 4,4'-dicyclohexylmethanecarbodiimide, ethylenebisdiphenylcarbodiimide, N,N'-benzyl-carbodiimide, N-octadecyl-N'-phenylcarbodiimide, N-benzyl-N'-phenylcarbodiimide, N-octadecyl-N'-tolylcarbodiimide, N-cyclohexyl-N'-tolylcarbodiimide, N-phenyl-N'-tolylcarbodiimide, N-benzyl-N'-tolylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, and di-tert-butylcarbodiimide.

Preferably, the amount of the fourth component D added is from 0.01 to 5 mol%, based on the total molar amount of the first component A.

As a further preferable technical scheme of the present invention, the semiaromatic polyester includes derivatives formed by the following components:
a first component A, including:
   a1) a C4-C12 aliphatic dicarboxylic acid or esters thereof, and
   a2) terephthalic acid or esters thereof;
a second component B: butanediol or propanediol;
a third component C: glycerol, pentaerythritol or trimethylolpropane; and
a fourth component D: hexamethylene diisocyanate, an epoxide, an oxazoline or a carbodiimide.

As a particular preferable scheme, the semiaromatic polyester includes derivatives formed by the following components:
a first component A, including:
   a1) succinic acid, adipic acid or sebacic acid and corresponding esters thereof, or a mixture thereof;
   a2) terephthalic acid or esters thereof;
a second component B: 1,4-butanediol or 1,3-propanediol;
a third component C: glycerol, pentaerythritol or trimethylolpropane; and
a fourth component D: hexamethylene diisocyanate.

Also provided in the present invention is a preparation method of the above-mentioned semiaromatic polyester, including the following steps:
S1. in a first step, a1 of the first component A is physically mixed with the second component B and the third component C in a first esterification reactor at ambient temperature; meanwhile, a2 of the first component A, the second component B and the third component C are physically mixed under the action of a portion of a catalyst in a second esterification reactor at ambient temperature; and if required, a3 of the first component A is added separately, and then the mixtures are heated separately to 150 to 280°C for esterification reactions for 1 to 2 hours to obtain esterification products Ba1 and Ba2, respectively;
S2. in a second step, the two esterification products Ba1 and Ba2 obtained in step S1 are mixed for a primary polycondensation reaction under the action of the remaining amount of the catalyst at a reaction temperature of from 230 to 270°C until a reaction product reaches a viscosity of from 20 to 60 ml/g, measured in a phenol/o-dichlorobenzene solution in a weight ratio of 1:1 and in a water bath kept at 25±0.05°C in accordance with GB/T 17931-1999;
S3. in a third step, the product of the primary polycondensation reaction in step S2 is transferred into a finisher for continuous polycondensation reaction at a temperature of 220 to 270°C until the reaction product reaches a viscosity of from 150 to 350 ml/g, measured in a phenol/o-dichlorobenzene solution in a weight ratio of 1:1 and in a water bath kept at 25±0.05°C in accordance with GB/T 17931-1999, and until the average segment length of the repeating unit Ba2 derived from the second component B and the component a2 in the reaction product, is from 1.85 to 2.25, and the carboxyl group content of the reaction product is from 5 to 60 mmol/kg, to obtain a semiaromatic polyester.

Preferably, when preparing the Ba2 esterification product in S1, the catalyst is added by an amount of from 0.001 to 1% by weight based on the final semiaromatic polyesters. Preferably, the amount added of the catalyst is from 0.02 to 0.2%. Controlling the amount of the catalyst added will make consequent processes more stable. Further, the catalyst may be tin compounds, antimony compounds, cobalt compounds, lead compounds, zinc compounds, aluminum compounds or titanium compounds, further preferably zinc compounds, aluminum compounds or titanium compounds, and particularly preferably titanium compounds. The advantage of titanium compounds, such as tetrabutyl orthotitanate or tetraisopropyl orthotitanate, when compared with the other compounds, is that residual amounts of the catalyst remaining within the product or downstream products are less toxic. This characteristic is particularly important in the biodegradable polyesters, since they pass directly into the environment, for example in the form of composting bags or mulch foils.

If necessary, the remaining amount of the catalyst is added in step S2. The reaction temperature in S2 is further preferably from 240 to 260°C. The pressure set at the start of S2 is generally from 0.1 to 0.5 bar, preferably from 0.2 to 0.4 bar, and the pressure set at the end of S2 is generally from 5 to 100 mbar, further preferably from 5 to 20 mbar. Typical reaction times in S2 are from 1 to 5 hours. In general circumstances, it is possible to produce prepolyesters with a viscosity of from 20 to 60 ml/g, measured in a phenol/o-dichlorobenzene solution in a weight ratio of 1:1 and in a water bath kept at 25±0.05°C in accordance with GB/T 17931-1999. And the carboxyl group content of the prepolyesters obtained after reactions in S2 is generally from 10 to 60 mmol/kg.

In the step of continuous polycondensation reaction in S3, a deactivator may be admixed with the prepolyesters, if necessary. Deactivators that can be used are generally phosphorus compounds, including phosphoric acid, phosphorous acid and esters thereof. Deactivators are generally added in step S3 if high-reactivity titanium catalysts are used in the system.

The reaction temperature in S3 is preferably from 230 to 250°C. The pressure set at the start of S3 is generally from 0.2 to 5 mbar, further preferably from 0.5 to 3 mbar. The reaction time for the continuous polycondensation reaction is preferably from 30 to 90 minutes, and further preferably from 40 to 80 minutes. It is possible to obtain products with a viscosity of from 100 to 350 ml/g, measured in a phenol/o-dichlorobenzene solution in a weight ratio of 1:1 and in a water bath kept at 25±0.05°C in accordance with GB/T 17931-1999. The carboxyl group content of the semiaromatic polyesters after reactions in S3 is generally from 5 to 60 mmol/kg, further preferably from 10 to 35 mmol/kg; and the average segment length of the repeating unit Ba2 derived from the second component B and the component a2 is from 1.85 to 2.25.

Also provided in the present invention is another preparation method of the above-mentioned semiaromatic polyester, including the following steps:
S1. in a first step, an aromatic polyester resin is physically mixed with a1 and a3 of the first component A, the second component B and the third component C at ambient temperature, and transesterified at from 150 to 180°C to obtain an esterification product;
S2. in a second step, with a catalyst added, the esterification product undergoes a primary polycondensation reaction at a temperature of from 230 to 270°C until the reaction product reaches a viscosity of from 20 to 60 ml/g, measured in a phenol/o-dichlorobenzene solution in a weight ratio of 1:1 and in a water bath kept at 25±0.05°C in accordance with GB/T 17931-1999;
S3. in a third step, the product of the primary polycondensation reaction in step S2 is transferred into a finisher for continuous polycondensation reaction at a temperature of from 220 to 270°C until the reaction product reaches a viscosity of from 150 to 350 ml/g, measured in a phenol/o-dichlorobenzene solution in a weight ratio of 1:1 and in a water bath kept at 25±0.05°C in accordance with GB/T 17931-1999, and until the average segment length of the repeating unit Ba2 derived from the component B and component a2 in the reaction product, is from 1.85 to 2.25, and the carboxyl group content of the reaction product is from 5 to 60 mmol/kg, to give a semiaromatic polyester.

Preferably, when it is required to add the fourth component D, the fourth component D is added during the continuous polycondensation reaction, and reactive extrusion is performed with a twin-screw extruder.

Further provided in the present invention is an application of the above-mentioned semiaromatic polyester in preparing compostable products, which may be fibers, thin films or containers.

Further provided herein is a semiaromatic polyester molding composition, which, based on weight percentage, includes the following components:
from 5 to 95 wt% of the above-mentioned semiaromatic polyester;
from 5 to 95 wt% of an additive and/or other polymers; and
from 0 to 70 wt% of a reinforcement material and/or a filler.

By way of example, the additive and/or other polymers may be at least one or more components selected from a group consisting of aliphatic polyesters, polycaprolactone, starch, cellulose, polyhydroxyalkanoates and polylactic acid.

Preferably, the additive and/or other polymers is/are added by from 20 to 80 wt% in the molding composition.

Compared to the prior art, the present invention has the following beneficial effects:
Provided in the present invention is a semiaromatic polyester with a specific segment length and carboxyl group content. The semiaromatic polyester provides a balance of degradation rate and mechanical properties, compared with known semiaromatic polyesters. The 30-day weight retention of the semiaromatic polyester obtained in the present invention can be contained within from 45 to 70%.

### DESCRIPTION OF THE EMBODIMENTS

Unless otherwise specified, the raw materials, reagents and solvents used herein are commercially purchased, without any further processing. Examples are used hereinafter to further demonstrate the present invention in details.

Moreover, unless otherwise specified, "parts" and "%" used herein refers to "parts by mass" and "% by mass", respectively.

### Test methods:

### Viscosity of semiaromatic polyesters:

The viscosity of semiaromatic polyesters was measured in a phenol/o-dichlorobenzene solution in a weight ratio of 1:1 and in a water bath kept at 25±0.05°C, specimen concentration being 5 mg/ml, in accordance with GB/T 17931-1999.

### Carboxyl group content:

The acid number A_{N} (mg KOH/g) was determined first according to DIN EN 12634 of October 1998, followed by a calculation of the carboxyl group content (mmol/kg), which equals to A_{N}/56×10³. The solvent mixture used comprised a mixture of 1 part by volume of DMSO, 8 parts by volume of propan-2-ol, and 7 parts by volume of toluene. The specimen of semiaromatic polyester was heated to 50°C, and the circuit used a single-rod electrode and potassium chloride filling. The standard solution used was tetramethylammonium hydroxide.

### Average segment length of Ba2:

The average segment length of Ba2 was measured with Bruker AV 400 NMR spectrometer, using deuterochloroform (CDCl₃) as solvent and tetramethylsilane (TMS) as internal reference. Data of segment length of Ba2 was obtained by calculations based on analysis of the test results by referring to the method on pages from 32 to 34 of the PhD thesis by Wang Xiaohui (Study on new process of synthesis and properties of biodegradable aliphatic-aromatic copolyesters, Wang Xiaohui, PhD thesis, Beijing University of Chemical Technology, 2011).

### Thirty-day weight retention:

The biodegradation test of semiaromatic polyesters was carried out according to GB/T 19277-2003. Firstly, the semiaromatic polyester specimen was pressed into a thin film of 0.10 mm thick, and cut into a specimen sheet of 1.2 cm × 2.0 cm, the weight of which is referred to as *a*₀. Then the specimen sheet was buried in composting soil and placed in a constant temperature chamber. The composting soil was municipal waste compost after 56 to 70 days of aeration and sieving. The test temperature was set constant at (58±2)°C. The compost specimen sheet was taken out after 30 days, washed, dried, and weighed, and the obtained weight of the specimen was recorded as *a*₁. The 30-day weight retention = *a*₁/*a*₀×100%. The higher the 30-day weight retention, the more difficult it is for the material to degrade; whereas the lower the 30-day weight retention, the faster the material degrades.

### Tensile properties of films:

The semiaromatic polyester was produced into thin films of 25±1 µm, and tested according to ISO 527 standards.

In all examples and comparative examples of the present invention, butanediol was overfed during polyester synthesis and the molar content of alcohols in the finished polymer is equal to the sum of the molar content of diacids. Limited in the following tables are the molar amounts of alcohols in the finished resin.

### Example 1:

S1. 437 kg/h of terephthalic acid, 323 kg/h of butanediol, 0.538 kg/h of glycerol and 0.506 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba1 was obtained; 437 kg/h of adipic acid, 367 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba2 was obtained.

S2. The esterification products Ba1 and Ba2 were passed through a static mixer and into a vertical continuous stirred tank reactor. The mixture was heated to 260°C. And 0.276 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 24 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 1 for the composition of raw materials and Table 14 for the results of the properties of the product.

**Table 1**

| | Dose in kg/h | Molecular weight in g/mol | Dose in mol/h | Content of each component in the resin, in mol%, based on the total molar amount of the first component A of 100% |
|---|---|---|---|---|
| terephth alic acid | 437 | 166.13 | 2,630 | 46.80 |
| adipic acid | 437 | 146.14 | 2,990 | 53.20 |
| butanedi ol | 690 | 90.12 | 7,656 | 100.00 |
| glycerol | 1.15 | 92.09 | 12.49 | 0.22 |
| tetrabuty l orthotitanate | 0.782 | 340.32 | 2.30 | 0.04 |
| phospho rous acid | 0.23 | 82 | 2.80 | 0.05 |
| HDI | 9.2 | 168.2 | 54.70 | 0.97 |

### Example 2:

S1. 437 kg/h of terephthalic acid, 323 kg/h of butanediol, 0.538 kg/h of glycerol and 0.506 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba2 was obtained; 525 kg/h of sebacic acid, 367 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba1 was obtained.

S2. The esterification products Ba1 and Ba2 were passed through a static mixer and into a vertical continuous stirred tank reactor. The mixture was heated to 260°C. And 0.276 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 26 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 2 for the composition of raw materials and Table 14 for the results of the properties of the product.

**Table 2**

| | Dose in kg/h | Molec ular weight in g/mol | Dose in mol/h | Content of each component in the resin, in mol%, based on the total molar amount of the first component A of 100% |
|---|---|---|---|---|
| terephthalic acid | 437 | 166.13 | 2,630 | 50.33 |
| sebacic acid | 525 | 202.25 | 2,596 | 49.67 |
| butanediol | 690 | 90.12 | 7,656 | 100.00 |
| glycerol | 1.15 | 92.09 | 12.49 | 0.24 |
| tetrabutyl orthotitanate | 0.782 | 340.32 | 2.30 | 0.04 |
| phosphorous acid | 0.23 | 82 | 2.80 | 0.05 |
| HDI | 9.2 | 168.2 | 54.70 | 1.05 |

### Example 3:

S1. 437 kg/h of terephthalic acid, 272 kg/h of propanediol, 0.538 kg/h of glycerol and 0.506 kg/h of tetrabutyl orthotitanate were physically mixed at ambient temperature in a first esterification reactor, then the mixture was esterified at 240°Cfor from 60 to 120 minutes at a pressure of 0.45 bar, and an esterification product Ba2 was obtained; 425 kg/h of adipic acid, 301 kg/h of propanediol and 0.612 kg/h of glycerol were physically mixed at ambient temperature in a second esterification reactor, then the mixture was esterified at 180°C for 120 minutes at a pressure of 1.0 bar, and an esterification product Ba1 was obtained.

S2. The esterification products Ba1 and Ba2 were passed through a static mixer and into a vertical continuous stirred tank reactor. The mixture was heated to 260°C. And 0.276 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 28 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 3 for the composition of raw materials and Table 14 for the results of the properties of the product.

**Table 3**

| | Dose in kg/h | Mole cular weight in g/mol | Dose in mol/h | Content of each component in the resin, in mol%, based on the total molar amount of the first component A of 100% |
|---|---|---|---|---|
| terephthalic acid | 437 | 166.1 3 | 2,630 | 47.49 |
| adipic acid | 425 | 146.1 4 | 2,908 | 52.51 |
| propanediol | 573 | 76.09 | 7,688 | 100.00 |
| glycerol | 1.15 | 92.09 | 12.49 | 0.23 |
| tetrabutyl orthotitanate | 0.782 | 340.3 2 | 2.30 | 0.04 |
| phosphorous acid | 0.23 | 82 | 2.80 | 0.05 |
| HDI | 9.2 | 168.2 | 54.70 | 0.99 |

### Example 4:

S1. 437 kg/h of terephthalic acid, 377 kg/h of butanediol, 0.538 kg/h of glycerol and 0.506 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba2 was obtained; 437 kg/h of adipic acid, 313 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba1 was obtained.

S2. The esterification products Ba1 and Ba2 were passed through a static mixer and into a vertical continuous stirred tank reactor. The mixture was heated to 260°C. And 0.276 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 30 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 4 for the composition of raw materials and Table 14 for the results of the properties of the product.

**Table 4**

| | Dose in kg/h | Molecular weight in g/mol | Dose in mol/h | Content of each component in the resin, in mol%, based on the total molar amount of the first component A of 100% |
|---|---|---|---|---|
| terephthalic acid | 437 | 166.13 | 2,630 | 46.80 |
| adipic acid | 437 | 146.14 | 2,990 | 53.20 |
| butanediol | 690 | 90.12 | 7,656 | 100.00 |
| glycerol | 1.15 | 92.09 | 12.49 | 0.22 |
| tetrabutyl orthotitanate | 0.782 | 340.32 | 2.30 | 0.04 |
| phosphorous acid | 0.23 | 82 | 2.80 | 0.05 |
| HDI | 9.2 | 168.2 | 54.70 | 0.97 |

### Example 5:

S1. 578 kg/h of a PBT resin (L08XM, intrinsic viscosity of 0.85 dL/g, Jiangsu Heshili New Material Co.,Ltd.), 437 kg/h of adipic acid, 312 kg/h of butanediol, 0.612 kg/h of glycerol and 0.506 kg/h of tetrabutyl orthotitanate were physically mixed at ambient temperature in an esterification reactor, then the mixture was reacted at 180°C for 120 minutes at a pressure of 1.0 bar, and a product E2 was obtained.

S2. The esterification product E2 was transferred into a vertical continuous stirred tank reactor, and heated to 260°C. And 0.276 kg/h of tetrabutyl orthotitanate was fed into the reactor. The pressure was lowered to 100 mbar for a constant temperature reaction for 180 minutes. Most of the excess butanediol was removed by distillation. At this time, the reaction product reached a viscosity of 35 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 5 for the composition of raw materials and Table 14 for the results of the properties of the product.

**Table 5**

| | Dose in kg/h | Molecular weight in g/mol | Dose in mol/h | Content of each component in the resin, in mol%, based on the total molar amount of the first component A of 100% |
|---|---|---|---|---|
| PBT | 578 | 220 (molecular weight of the repeating unit in PBT) | 2,627 | 46.77 (molar amount of terephthalic acid from PBT) |
| adipic acid | 437 | 146.14 | 2,990 | 53.23 |
| butanediol | 312 | 90.12 | 3,462 | 100.00 |
| glycerol | 0.612 | 92.09 | 6.65 | 0.12 |
| tetrabutyl orthotitanate | 0.782 | 340.32 | 2.30 | 0.04 |
| phosphorous acid | 0.23 | 82 | 2.80 | 0.05 |
| HDI | 9.2 | 168.2 | 54.70 | 0.97 |

### Example 6:

S1. 437 kg/h of terephthalic acid, 323 kg/h of butanediol, 0.538 kg/h of glycerol and 0.506 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba2 was obtained; 437 kg/h of adipic acid, 367 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba1 was obtained.

S2. The esterification products Ba1 and Ba2 were passed through a static mixer and into a vertical continuous stirred tank reactor. The mixture was heated to 260°C. And 0.276 kg/h of tetrabutyl orthotitanate was fed into the reactor. The pressure was lowered to 100 mbar. Most of the excess butanediol was removed by distillation. After a reaction time of 120 minutes, the reaction product reached a viscosity of 32 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The above-mentioned polyester was introduced into a twin-screw extruder, and 9.2 kg/h of hexamethylene diisocyanate (HDI) was metered into the polyester at a set temperature of 240°C. After a residence time of 15 minutes, the polyester was pelletized, using an underwater pelletizer, and dried to give the finished polyester product. See Table 6 for the composition of raw materials and Table 14 for the results of the properties of the product.

**Table 6:**

| | Dose in kg/h | Molecu lar weight in g/mol | Dose in mol/h | Content of each component in the resin, in mol%, based on the total molar amount of the first component A of 100% |
|---|---|---|---|---|
| terephthalic acid | 437 | 166.13 | 2,630 | 46.80 |
| adipic acid | 437 | 146.14 | 2,990 | 53.20 |
| butanediol | 690 | 90.12 | 7,656 | 100.00 |
| glycerol | 1.15 | 92.09 | 12.49 | 0.22 |
| tetrabutyl orthotitanate | 0.782 | 340.32 | 2.30 | 0.04 |
| phosphorous acid | 0.23 | 82 | 2.80 | 0.05 |
| HDI | 9.2 | 168.2 | 54.70 | 0.97 |

### Example 7:

S1. 608 kg/h of terephthalic acid, 449 kg/h of butanediol, 0.748 kg/h of glycerol and 0.653 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba2 was obtained; 437 kg/h of adipic acid, 366 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba1 was obtained.

S2. The esterification products Ba1 and Ba2 were passed through a static mixer and into a vertical continuous stirred tank reactor. The mixture was heated to 260°C. And 0.267 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 27 ml/g, measured in a phenol/o-dichlorobenzene solution in a weight ratio of 1:1 and in a water bath kept at 25±0.05°C in accordance with GB/T 17931-1999.

S3. After addition of 0.27 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 10.9 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 7 for the composition of raw materials and Table 14 for the results of the properties of the product.

**Table 7**

| | Dos e in kg/h | Molecular weight in g/mol | Dose in mol/h | Content of each component in the resin, in mol%, based on the total molar amount of the first component A of 100% |
|---|---|---|---|---|
| terephthalic acid | 608 | 166.13 | 3,660 | 55.03 |
| adipic acid | 437 | 146.14 | 2,990 | 44.97 |
| butanediol | 815 | 90.12 | 9,043 | 100.00 |
| glycerol | 1.36 | 92.09 | 14.77 | 0.22 |
| tetrabutyl orthotitanate | 0.92 | 340.32 | 2.70 | 0.04 |
| phosphorous acid | 0.27 | 82 | 3.32 | 0.05 |
| HDI | 10.9 | 168.2 | 64.80 | 0.97 |

### Comparative example 1:

S1. 437 kg/h of terephthalic acid, 323 kg/h of butanediol, 0.538 kg/h of glycerol and 0.782 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba2 was obtained; 437 kg/h of adipic acid, 367 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba1 was obtained.

S2. The esterification products Ba1 and Ba2 were passed through a static mixer and into a vertical continuous stirred tank reactor. The mixture was heated to 260°C. Then, the pressure was lowered to 100 mbar. Most of the excess butanediol was removed by distillation. After a reaction time of 60 minutes, the reaction product reached a viscosity of 20 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 8 for the composition of raw materials and Table 14 for the results of the properties of the product.

**Table 8**

| | D ose in kg/h | Molecular weight in g/mol | Dose in mol/h | Content of each component in the resin, in mol%, based on the total molar amount of the first component A of 100% |
|---|---|---|---|---|
| terephthalic acid | 43 7 | 166.13 | 2,630 | 46.80 |
| adipic acid | 43 7 | 146.14 | 2,990 | 53.20 |
| butanediol | 69 0 | 90.12 | 7,656 | 100.00 |
| glycerol | 1. 15 | 92.09 | 12.49 | 0.22 |
| tetrabutyl orthotitanate | 0. 782 | 340.32 | 2.30 | 0.04 |
| phosphorous acid | 0. 23 | 32 | 2.80 | 0.05 |
| HDI | 9. 2 | 168.2 | 54.70 | 0.97 |

### Comparative example 2:

S1. 437 kg/h of terephthalic acid, 690 kg/h of butanediol, 437 kg/h of adipic acid, 1.15 kg/h of glycerol and 0.506 kg/h of tetrabutyl orthotitanate were physically mixed at ambient temperature in an esterification reactor, then the mixture was esterified at 240°C for from 60 to 120 minutes at a pressure of 0.45 bar, and an esterification product F was obtained.

S2. The esterification product F was transferred to a vertical continuous stirred tank reactor, and heated to 260°C. And 0.276 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 26 ml/g, measured in a phenol/o-dichlorobenzene solution in a weight ratio of 1:1 and in a water bath kept at 25±0.05°C in accordance with GB/T 17931-1999.

S3. After addition of 0.23 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The above-mentioned polyester was introduced into a twin-screw extruder, and 9.2 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 9 for the composition of raw materials and Table 14 for the results of the properties of the product.

**Table 9**

| | Dos e in kg/h | Molecular weight in g/mol | Dose in mol/h | Content of each component in the resin, in mol%, based on the total molar amount of the first component A of 100% |
|---|---|---|---|---|
| terephthalic acid | 437 | 166.13 | 2,630 | 46.80 |
| adipic acid | 437 | 146.14 | 2,990 | 53.20 |
| butanediol | 690 | 90.12 | 7,656 | 100.00 |
| glycerol | 1.15 | 92.09 | 12.49 | 0.22 |
| tetrabutyl orthotitanate | 0.78 2 | 340.32 | 2.30 | 0.04 |
| phosphorous acid | 0.23 | 82 | 2.80 | 0.05 |
| HDI | 9.2 | 168.2 | 54.70 | 0.97 |

### Comparative example 3:

At ambient temperature, 874 g of terephthalic acid, 1,380 g of butanediol, 874 g of adipic acid, 2.3 g of glycerol and 1.012 g of tetrabutyl orthotitanate were physically mixed in a 5-Liter stainless steel reactor, then the mixer was esterified at 240°C as water was removed by distillation till the end of the esterification reaction when the amount of product water obtained from the reaction reached a theoretical water production level; then 0.552 g of tetrabutyl orthotitanate and 0.46 g of phosphorous acid were added to the reaction system, and after gradual pressure reduction, the final reaction temperature was from 270 to 275°C and the pressure was lower than 100 Pa. The end point of the polycondensation reaction was determined according to the growth rate of stirring power. Then the reaction system was restored to ambient pressure with nitrogen, and polyester product was obtained after water cooling pelletization. See Table 10 for the composition of raw materials and Table 14 for the results of the properties of the product.

**Table 10**

| | Dose in kg/h | Molecular weight in g/mol | Dose in mol/h | Content of each component in the resin, in mol%, based on the total molar amount of the first component A of 100% |
|---|---|---|---|---|
| terephthal ic acid | 874 | 166.13 | 5.26 | 46.80 |
| adipic acid | 874 | 146.14 | 5.98 | 53.20 |
| butanediol | 1380 | 90.12 | 15.31 | 100.00 |
| glycerol | 2.3 | 92.09 | 0.025 | 0.22 |
| tetrabutyl orthotitanate | 1.564 | 340.32 | 0.0046 | 0.04 |
| phosphoro us acid | 0.46 | 82 | 0.0056 | 0.05 |

### Comparative example 4:

At ambient temperature, 874 g of terephthalic acid, 1,380 g of butanediol, 874 g of adipic acid, 2.3 g of glycerol and 1.012 g of tetrabutyl orthotitanate were physically mixed in a 5-Liter stainless steel reactor, then the mixer was esterified at 240°C as water was removed by distillation till the end of the esterification reaction when the amount of product water obtainable from the reaction reached a theoretical water production level; then 0.552 g of tetrabutyl orthotitanate and 0.46 g of phosphorous acid were added to the reaction system, and after gradual pressure reduction, the final reaction temperature was from 270 to 275°C, and the pressure was lower than 100 Pa. Meanwhile 18.4 g of hexamethylene diisocyanate (HDI) was metered into the reaction system at a set temperature of 240°C. After a residence time of 5 minutes, the reaction system was restored to ambient pressure with nitrogen, and polyester product was obtained after water cooling pelletization. See Table 11 for the composition of raw materials and Table 14 for the results of the properties of the product.

**Table 11**

| | Dose in kg/h | Molecular weight in g/mol | Dose in mol/h | Content of each component in the resin, in mol%, based on the total molar amount of the first component A of 100% |
|---|---|---|---|---|
| terephthal ic acid | 874 | 166.13 | 5.26 | 46.80 |
| adipic acid | 874 | 146.14 | 5.98 | 53.20 |
| butanedio l | 1380 | 90.12 | 15.31 | 100.00 |
| glycerol | 2.3 | 92.09 | 0.025 | 0.22 |
| tetrabutyl orthotitanate | 1.564 | 340.32 | 0.0046 | 0.04 |
| phosphor ous acid | 0.46 | 82 | 0.0056 | 0.05 |
| HDI | 18.4 | 168.2 | 0.1094 | 0.97 |

### Comparative example 5:

S1. 793 kg/h of terephthalic acid, 585 kg/h of butanediol, 0.978 kg/h of glycerol and 0.753 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba1 was obtained; 437 kg/h of adipic acid, 366 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba2 was obtained.

S2. The esterification products Ba1 and Ba2 were passed through a static mixer and into a vertical continuous stirred tank reactor. The mixture was heated to 260°C. And 0.327 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 29 ml/g, measured in a phenol/o-dichlorobenzene solution in a weight ratio of 1:1 and in a water bath kept at 25±0.05°C in accordance with GB/T 17931-1999.

S3. After addition of 0.32 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtained polyester was introduced into a twin-screw extruder, and 12.7 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 12 for the composition of raw materials and Table 14 for the results of the properties of the product.

**Table 12**

| | Dose in kg/h | Molecular weight in g/mol | Dose in mol/h | Content of each component in the resin, in mol%, based on the total molar amount of the first component A of 100% |
|---|---|---|---|---|
| terephthalic acid | 793 | 166.13 | 4,773 | 61.48 |
| adipic acid | 437 | 146.14 | 2,990 | 38.52 |
| butanediol | 951 | 90.12 | 10,553 | 100.00 |
| glycerol | 1.59 | 92.09 | 17.27 | 0.22 |
| tetrabutyl orthotitanate | 1.08 | 340.32 | 3.17 | 0.04 |
| phosphorous acid | 0.318 | 32 | 3.88 | 0.05 |
| HDI | 12.73 | 168.2 | 75.68 | 0.97 |

### Comparative example 6:

S1. 295 kg/h of terephthalic acid, 218 kg/h of butanediol, 0.363 kg/h of glycerol and 0.426 kg/h of tetrabutyl orthotitanate were physically mixed at ambient temperature in a first esterification reactor, then the mixture was esterified at 240°C for from 60 to 120 minutes at a pressure of 0.45 bar, and an esterification product Ba1 was obtained; 437 kg/h of adipic acid, 366 kg/h of butanediol and 0.612 kg/h of glycerol were physically mixed at ambient temperature in a second esterification reactor, then the mixture was esterified at 180°C for 120 minutes at a pressure of 1.0 bar, and an esterification product Ba2 was obtained.

S2. The esterification products Ba1 and Ba2 were passed through a static mixer and into a vertical continuous stirred tank reactor. The mixture was heated to 260°C. And 0.237 kg/h of tetrabutyl orthotitanate was fed into the reactor. The pressure was lowered to 100 mbar. Most of the excess butanediol was removed by distillation. After a reaction time of 60 minutes, the reaction product reached a viscosity of 31 ml/g, measured in a phenol/o-dichlorobenzene solution in a weight ratio of 1:1 and in a water bath kept at 25±0.05°C in accordance with GB/T 17931-1999.

S3. After addition of 0.19 kg/h of phosphorous acid, the reaction mixture was transferred into a finisher and further polycondensed at a temperature of 260°C, and at a pressure of 4 mbar for from 60 to 100 minutes. The remaining excess of butanediol was removed by distillation. The obtainable polyester was introduced into a twin-screw extruder, and 7.8 kg/h of hexamethylene diisocyanate (HDI) was metered into the polyester at a set temperature of 240°C. After a residence time of 5 minutes, the polyester was pelletized, using an underwater pelletizer, and dried to give the finished polyester product. See Table 13 for the composition of raw materials and Table 14 for the results of the properties of the product.

**Table 13**

| | Dose in kg/h | Molecular weight in g/mol | Dose in mol/h | Content of each component in the resin, in mol%, based on the total molar amount of the first component A of 100% |
|---|---|---|---|---|
| terephthali | 295 | 166.13 | 1,776 | 37.26 |
| c acid | | | | |
| adipic acid | 437 | 146.14 | 2,990 | 62.74 |
| butanediol | 584 | 90.12 | 6,480 | 100.00 |
| glycerol | 0.975 | 92.09 | 10.59 | 0.22 |
| tetrabutyl orthotitanate | 0.663 | 340.32 | 1.95 | 0.04 |
| phosphoro us acid | 0.195 | 82 | 2.38 | 0.05 |
| HDI | 7.8 | 168.2 | 46.37 | 0.97 |

**Table 14 Test results of product properties in each example and comparative example**

| | Ex ample 1 | Ex ample 2 | Ex ample 3 | Ex ample 4 | Ex ample 5 | Ex ample 6 | Ex ample 7 |
|---|---|---|---|---|---|---|---|
| Viscosity in ml/g | 28 0 | 27 5 | 28 8 | 20 5 | 29 5 | 26 3 | 28 1 |
| Carboxyl group content in mmol/kg | 25 | 28 | 22 | 37 | 24 | 39 | 29 |
| Average segment length of Ba2 | 1.9 1 | 1.8 7 | 1.8 9 | 1.9 0 | 2.0 8 | 1.8 6 | 2.2 4 |
| Machine-direction tensile strength of films in MPa | 35 | 32 | 37 | 31 | 33 | 32 | 34 |
| Transverse-direction tensile strength of films in MPa | 38 | 35 | 40 | 33 | 36 | 33 | 37 |
| 30-day weight retention in % | 57 | 55 | 59 | 48 | 64 | 50 | 68 |

**Table 14 continued:**

| | Com parative example 1 | Com parative example 2 | Com parative example 3 | Com parative example 4 | Com parative example 5 | Com parative example 6 |
|---|---|---|---|---|---|---|
| Viscosity in ml/g | 262 | 281 | 173 | 277 | 283 | 277 |
| carboxyl group content in mmol/kg | 63 | 22 | 66 | 68 | 28 | 27 |
| Average segment length of Ba2 | 1.88 | 1.82 | 1.87 | 1.84 | 2.75 | 1.64 |
| Machine-direction tensile strength of films in MPa | 30 | 33 | 26 | 31 | 36 | 28 |
| Transverse-direction tensile strength of films in MPa | 32 | 36 | 28 | 34 | 39 | 29 |
| 30-day weight retention in % | 40 | 42 | 39 | 42 | 90 | 20 |

It can be seen from the results in Table 14 that, the average segment length of Ba2 herein is contained between 1.85 and 2.25, and carboxyl group content is contained in a range from 5 to 60 mmol/kg, and the obtained semiaromatic polyester shows a balance between degradation rate and mechanical properties. The 30-day weight retention of the semiaromatic polyester obtained in the present invention may be contained to from 45 to 70%, and more preferably contained to from 50 to 60%. Meanwhile, the machine-direction or transverse-direction tensile strength of the films can be maintained above 30 MPa.

As demonstrated by the results of examples and comparative examples 1 to 4, the average segment length of obtained Ba2 and carboxyl group content are out of the range of the present invention in the case of different preparation processes although the same raw materials were used, and the obtained semiaromatic polyester did not have a balance between degradation rate and mechanical properties.

The average segment length of Ba2 in comparative example 5 is too large, resulting in a degradation rate that is too low for the material to degrade; whereas in comparative example 6, the average segment length of Ba2 was too small, leading to a degradation rate of the material that is too high.

## Claims

1. A semiaromatic polyester, **characterized in that**, the semiaromatic polyester comprises derivatives formed by the following components:
a first component A, based on a total molar amount of the first component A, comprising:
a1) from 40 to 60 mol% of at least one aliphatic dicarboxylic acid or ester derivatives thereof or anhydride derivatives thereof,
a2) from 40 to 60 mol% of at least one aromatic dicarboxylic acid or ester derivatives thereof or anhydride derivatives thereof,
a3) from 0 to 5 mol% of a compound containing sulfonate groups;
a second component B with at least equimolar amount with respect to the first component A, comprising diols having from 2 to 12 carbon atoms; and
a third component C, based on a total molar amount of the first component A, being one or more selected from the following:
c1) from 0 to 5 mol% of a compound containing at least 3 hydroxy groups,
c2) from 0 to 5 mol% of a dihydroxy compound containing an ether group,
c3) from 0 to 25 mol% of a hydroxycarboxylic acid or cyclic derivatives thereof, and
c4) from 0 to 25 mol% of an amino alkanol having from 2 to 12 carbon atoms, or an amino cycloalkanol having from 2 to 12 carbon atoms,
c5) from 0 to 25 mol% of a diamine having from 1 to 12 carbon atoms, and
c6) from 0 to 15 mol% of an aminocarboxylic acid compound,
wherein the percentage of at least one of components c1) to c6) is not 0, and a total of the molar percentages of c1) to c6) is 100%;
wherein the average segment length of a repeating unit Ba2 derived from the second component B and the component a2 of the semiaromatic polyester, is from 1.85 to 2.25 as calculated using ¹HNMR; and the carboxyl group content of the semiaromatic polyester is from 5 to 60 mmol/kg.

2. The semiaromatic polyester according to claim 1, **characterized in that**, the average segment length of the repeating unit Ba2 derived from the second component B and the component a2 of the semiaromatic polyester, is from 1.87 to 2.0 as calculated using ¹HNMR; and the carboxyl group content of the semiaromatic polyester is from 10 to 35 mmol/kg.

3. The semiaromatic polyester according to claim 1, **characterized in that**, the molar amount of a2 in the first component A is from 45 to 50 mol%.

4. The semiaromatic polyester according to claim 1, **characterized in that**, the molar amount of the third component C is from 0.01 to 4 mol%, based on the total molar amount of the first component A.

5. The semiaromatic polyester according to claim 1, **characterized in that**, the third component C is glycerol, pentaerythritol or trimethylolpropane.

6. The semiaromatic polyester according to claim 4, **characterized in that**, the third component C is glycerol, pentaerythritol or trimethylolpropane.

7. The semiaromatic polyester according to claim 1, **characterized in that**, the semiaromatic polyester further comprises a fourth component D, the fourth component D being a chain extender; and a molar amount of the fourth component D is from 0.01 to 5 mol%, based on the total molar amount of the first component A.

8. The semiaromatic polyester according to claim 7, **characterized in that**, the chain extender is one or a mixture of more selected from a group consisting of isocyanates, isocyanurates, peroxides, epoxides, oxazolines, oxazines, carbodiimides and polycarbodiimides, which have two or more functional groups.

9. The semiaromatic polyester according to claim 1, **characterized in that**, the semiaromatic polyester comprises derivatives formed by the following components:
a first component A, comprising:
a1) a C4-C12 aliphatic dicarboxylic acid or ester derivatives thereof, and
a2) terephthalic acid or ester derivatives thereof,
a second component B: butanediol or propanediol;
a third component C: glycerol, pentaerythritol or trimethylolpropane; and
a fourth component D: hexamethylene diisocyanate, an epoxide, an oxazoline or a carbodiimide.

10. The semiaromatic polyester according to claim 1, **characterized in that**, the semiaromatic polyester has a viscosity of from 150 to 350 ml/g, measured in a phenol/o-dichlorobenzene solution in a weight ratio of 1:1 and in a water bath kept at 25±0.05°C in accordance with GB/T 17931-1999.

11. A preparation method of the semiaromatic polyester according to claim 1, **characterized in that**, the method comprises the following steps:
S1, physically mixing a1 of the first component A with the second component B and the third component C in a first esterification reactor at ambient temperature, and meanwhile, physically mixing a2 of the first component A, the second component B and the third component C under the action of a portion of a catalyst in a second esterification reactor at ambient temperature, and then heating the mixtures separately to from 150 to 280°C for esterification reactions for 1 to 2 hours so as to obtain esterification products Ba1 and Ba2, respectively;
S2, mixing the two esterification products Ba1 and Ba2 obtained in step S1 for a primary polycondensation reaction under the action of the remaining amount of the catalyst at a reaction temperature of from 230 to 270°C until a reaction product thereof reaches a viscosity of from 20 to 60 ml/g, measured in a phenol/o-dichlorobenzene solution in a weight ratio of 1:1 and in a water bath kept at 25±0.05°C in accordance with GB/T 17931-1999; and
S3, transferring the product of the primary polycondensation reaction in step S2 into a finisher for continuous polycondensation reaction at a temperature of from 220 to 270°C until a reaction product thereof reaches a viscosity of from 150 to 350 ml/g, measured in a phenol/o-dichlorobenzene solution in a weight ratio of 1:1 and in a water bath kept at 25±0.05°C in accordance with GB/T 17931-1999, and until the average segment length of the repeating unit Ba2 derived from the second component B and the component a2 in the reaction product, is from 1.85 to 2.25, and the carboxyl group content of the reaction product is from 5 to 60 mmol/kg, to obtain a semiaromatic polyester.

12. A preparation method of the semiaromatic polyester according to claim 1, **characterized in that**, the method comprises the following steps:
S1, physically mixing an aromatic polyester resin with a1 and a3 of the first component A, the second component B and the third component C at ambient temperature, and performing a transesterification reaction at 150 to 180°C to obtain an esterification product;
S2, adding a catalyst into the esterification product for a primary polycondensation reaction at a temperature of from 230 to 270°C until a reaction product thereof reaches a viscosity of 20 to 60 ml/g, measured in a phenol/o-dichlorobenzene solution in a weight ratio of 1:1 and in a water bath kept at 25±0.05°C in accordance with GB/T 17931-1999; and
S3, transferring the product of the primary polycondensation reaction in step S2 into a finisher for continuous polycondensation reaction at a temperature of from 220 to 270°C until a reaction product thereof reaches a viscosity of 150 to 350 ml/g, measured in a phenol/o-dichlorobenzene solution in a weight ratio of 1:1 and in a water bath kept at 25±0.05°C in accordance with GB/T 17931-1999, and until the average segment length of the repeating unit Ba2 derived from the second component B and the component a2 in the reaction product, is from 1.85 to 2.25, and the carboxyl group content of the reaction product is from 5 to 60 mmol/kg, so as to obtain a semiaromatic polyester.

13. The preparation method of the semiaromatic polyester according to claim 11, **characterized in that**, in S3, a fourth component D is added during the continuous polycondensation reaction, and reactive extrusion is performed with a twin-screw extruder.

14. The preparation method of the semiaromatic polyester according to claim 12, **characterized in that**, in S3, a fourth component D is added during the continuous polycondensation reaction, and reactive extrusion is performed with a twin-screw extruder.

15. A semiaromatic polyester molding composition, **characterized in that**, based on weight percentage, the composition comprises the following components:
from 5 to 95 wt% of the semiaromatic polyester according to claim 1;
from 5 to 95 wt% of an additive and/or other polymers; and
from 0 to 70 wt% of a reinforcement material and/or a filler.

16. An application of the semiaromatic polyester according to claim 1 in preparing compostable products, **characterized in that**, the compostable products are fibers, thin films or containers.

## Patentansprüche

1. Halbaromatischer Polyester, **dadurch gekennzeichnet, dass** der halbaromatische Polyester Derivate umfasst, die durch die folgenden Komponenten gebildet sind:
eine erste Komponente A, die Folgendes umfasst, bezogen auf eine Gesamtstoffmenge der ersten Komponente A:
a1) 40 bis 60 Mol-% wenigstens einer aliphatischen Dicarbonsäure oder von Esterderivaten davon oder von Anhydridderivaten davon,
a2) 40 bis 60 Mol-% wenigstens einer aromatischen Dicarbonsäure oder von Esterderivaten davon oder von Anhydridderivaten davon,
a3) 0 bis 5 Mol-% einer Verbindung, die Sulfonatgruppen enthält;
eine zweite Komponente B mit einer wenigstens äquimolaren Menge in Bezug auf die Komponente A, die Diole mit 2 bis 12 Kohlenstoffatomen umfasst; und
eine dritte Komponente C, bezogen auf die Gesamtstoffmenge der ersten Komponente A, bei der es sich um eine oder mehrere handelt, die aus den folgenden ausgewählt sind:
c1) 0 bis 5 Mol-% einer Verbindung, die wenigstens 3 Hydroxygruppen enthält,
c2) 0 bis 5 Mol-% einer Dihydroxyverbindung, die eine Ethergruppe enthält,
c3) 0 bis 25 Mol-% einer Hydroxycarbonsäure oder von cyclischen Derivaten davon und
c4) 0 bis 25 Mol-% eines Aminoalkanols mit 2 bis 12 Kohlenstoffatomen oder eines Aminocycloalkanols mit 2 bis 12 Kohlenstoffatomen,
c5) 0 bis 25 Mol-% eines Diamins mit 1 bis 12 Kohlenstoffatomen und
c6) 0 bis 15 Mol-% einer Aminocarbonsäureverbindung,
wobei der Prozentanteil wenigstens einer der Komponenten c1) bis c6) nicht 0 ist und die Summe der molaren Prozentanteile von c1) bis c6) 100% beträgt;
wobei die mittlere Segmentlänge einer Repetiereinheit Ba2, die von der zweiten Komponente B und der Komponente a2 des halbaromatischen Polyesters abgeleitet ist, 1,85 bis 2,25 beträgt, wie mit Hilfe von ¹H-NMR berechnet wird; und der Carboxygruppengehalt des halbaromatischen Polyesters 5 bis 60 mmol/kg beträgt.

2. Halbaromatischer Polyester gemäß Anspruch 1, **dadurch gekennzeichnet, dass** die mittlere Segmentlänge der Repetiereinheit Ba2, die von der zweiten Komponente B und der Komponente a2 des halbaromatischen Polyesters abgeleitet ist, 1,87 bis 2,0 beträgt, wie mit Hilfe von ¹H-NMR berechnet wird; und der Carboxygruppengehalt des halbaromatischen Polyesters 10 bis 35 mmol/kg beträgt.

3. Halbaromatischer Polyester gemäß Anspruch 1, **dadurch gekennzeichnet, dass** die Stoffmenge von a2 in der ersten Komponente A 45 bis 50 Mol-% beträgt.

4. Halbaromatischer Polyester gemäß Anspruch 1, **dadurch gekennzeichnet, dass** die Stoffmenge der dritten Komponente C 0,01 bis 4 Mol-% beträgt, bezogen auf die Gesamtstoffmenge der ersten Komponente A.

5. Halbaromatischer Polyester gemäß Anspruch 1, **dadurch gekennzeichnet, dass** es sich bei der dritten Komponente C um Glycerin, Pentaerythrit oder Trimethylolpropan handelt.

6. Halbaromatischer Polyester gemäß Anspruch 4, **dadurch gekennzeichnet, dass** es sich bei der dritten Komponente C um Glycerin, Pentaerythrit oder Trimethylolpropan handelt.

7. Halbaromatischer Polyester gemäß Anspruch 1, **dadurch gekennzeichnet, dass** der halbaromatische Polyester weiterhin eine vierte Komponente D umfasst, wobei die vierte Komponente D ein Kettenverlängerer ist; und die Stoffmenge der vierten Komponente D 0,01 bis 5 Mol-% beträgt, bezogen auf die Gesamtstoffmenge der ersten Komponente A.

8. Halbaromatischer Polyester gemäß Anspruch 7, **dadurch gekennzeichnet, dass** es sich bei dem Kettenverlängerer um einen oder ein Gemisch von mehreren handelt, die aus der Gruppe ausgewählt sind, die aus Isocyanaten, Isocyanuraten, Peroxiden, Epoxiden, Oxazolinen, Oxazinen, Carbodiimiden und Polycarbodiimiden, die zwei oder mehr funktionelle Gruppen aufweisen, besteht.

9. Halbaromatischer Polyester gemäß Anspruch 1, **dadurch gekennzeichnet, dass** der halbaromatische Polyester Derivate umfasst, die durch die folgenden Komponenten gebildet sind:
eine erste Komponente A, umfassend:
a1) eine aliphatische C₄-C₁₂-Dicarbonsäure oder Esterderivate davon und
a2) Terephthalsäure oder Esterderivate davon,
eine zweite Komponente B: Butandiol oder Propandiol;
eine dritte Komponente C: Glycerin, Pentaerythrit oder Trimethylolpropan; und
eine vierte Komponente D: Hexamethylendiisocyanat, ein Epoxid, ein Oxazolin oder ein Carbodiimid.

10. Halbaromatischer Polyester gemäß Anspruch 1, **dadurch gekennzeichnet, dass** der halbaromatische Polyester eine Viskosität von 150 bis 350 ml/g aufweist, die in einer Phenol/o-Dichlorbenzol-Lösung in einem Gewichtsverhältnis von 1:1 und in einem auf 25 ± 0,05°C gehaltenen Wasserbad gemäß GB/T 17931-1999 gemessen wird.

11. Herstellungsverfahren für den halbaromatischen Polyester gemäß Anspruch 1, **dadurch gekennzeichnet, dass** das Verfahren die folgenden Schritte umfasst:
S1, physikalisches Mischen a1 der ersten Komponente A mit der zweiten Komponente B und der dritten Komponente C in einem ersten Veresterungsreaktor bei Umgebungstemperatur, und inzwischen physikalisches Mischen a2 der ersten Komponente A, der zweiten Komponente B und der dritten Komponente C unter der Einwirkung eines Teils eines Katalysators in einem zweiten Veresterungsreaktor bei Umgebungstemperatur und dann separates Erhitzen der Gemische auf 150 bis 280°C für Veresterungsreaktionen während 1 bis 2 Stunden, wobei man die Veresterungsprodukte Ba1 bzw. Ba2 erhält;
S2, Mischen der zwei Veresterungsprodukte Ba1 bzw. Ba2, die in Schritt S1 erhalten wurden, für eine primäre Polykondensationsreaktion unter der Einwirkung der restlichen Menge des Katalysators bei einer Reaktionstemperatur von 230 bis 270 °C, bis ein Reaktionsprodukt davon eine Viskosität von 20 bis 60 ml/g erreicht, die in einer Phenol/o-Dichlorbenzol-Lösung in einem Gewichtsverhältnis von 1:1 und in einem auf 25 ± 0,05°C gehaltenen Wasserbad gemäß GB/T 17931-1999 gemessen wird; und
S3, Überführen des Produkts der primären Polykondensationsreaktion in Schritt S2 in einen Finisher zur kontinuierlichen Polykondensationsreaktion bei einer Temperatur von 220 bis 270 °C, bis ein Reaktionsprodukt davon eine Viskosität von 150 bis 350 ml/g erreicht, die in einer Phenol/o-Dichlorbenzol-Lösung in einem Gewichtsverhältnis von 1:1 und in einem auf 25 ± 0,05°C gehaltenen Wasserbad gemäß GB/T 17931-1999 gemessen wird, und bis die mittlere Segmentlänge der Repetiereinheit Ba2, die von der zweiten Komponente B und der Komponente a2 abgeleitet ist, in dem Reaktionsprodukt 1,85 bis 2,25 beträgt und der Carboxygruppengehalt des Reaktionsprodukts 5 bis 60 mmol/kg beträgt, wobei man einen halbaromatischen Polyester erhält.

12. Herstellungsverfahren für den halbaromatischen Polyester gemäß Anspruch 1, **dadurch gekennzeichnet, dass** das Verfahren die folgenden Schritte umfasst:
S1, physikalisches Mischen eines aromatischen Polyesterharzes mit a1 und a3 der ersten Komponente A, der zweiten Komponente B und der dritten Komponente C bei Umgebungstemperatur, und Durchführen einer Umesterungsreaktion bei 150 bis 180°C, wobei man ein Veresterungsprodukt erhält;
S2, Hinzufügen eines Katalysators zu dem Veresterungsprodukt für eine primäre Polykondensationsreaktion bei einer Temperatur von 230 bis 270°C, bis ein Reaktionsprodukt davon eine Viskosität von 20 bis 60 ml/g erreicht, die in einer Phenol/o-Dichlorbenzol-Lösung in einem Gewichtsverhältnis von 1:1 und in einem auf 25 ± 0,05°C gehaltenen Wasserbad gemäß GB/T 17931-1999 gemessen wird; und
S3, Überführen des Produkts der primären Polykondensationsreaktion in Schritt S2 in einen Finisher zur kontinuierlichen Polykondensationsreaktion bei einer Temperatur von 220 bis 270 °C, bis ein Reaktionsprodukt davon eine Viskosität von 150 bis 350 ml/g erreicht, die in einer Phenol/o-Dichlorbenzol-Lösung in einem Gewichtsverhältnis von 1:1 und in einem auf 25 ± 0,05°C gehaltenen Wasserbad gemäß GB/T 17931-1999 gemessen wird, und bis die mittlere Segmentlänge der Repetiereinheit Ba2, die von der zweiten Komponente B und der Komponente a2 abgeleitet ist, in dem Reaktionsprodukt 1,85 bis 2,25 beträgt und der Carboxygruppengehalt des Reaktionsprodukts 5 bis 60 mmol/kg beträgt, wobei man einen halbaromatischen Polyester erhält.

13. Herstellungsverfahren für den halbaromatischen Polyester gemäß Anspruch 11, **dadurch gekennzeichnet, dass** in S3 während der kontinuierlichen Polykondensationsreaktion eine vierte Komponente D hinzugefügt wird und die reaktive Extrusion mit einem Doppelschneckenextruder durchgeführt wird.

14. Herstellungsverfahren für den halbaromatischen Polyester gemäß Anspruch 12, **dadurch gekennzeichnet, dass** in S3 während der kontinuierlichen Polykondensationsreaktion eine vierte Komponente D hinzugefügt wird und die reaktive Extrusion mit einem Doppelschneckenextruder durchgeführt wird.

15. Formmasse aus halbaromatischem Polyester, **dadurch gekennzeichnet, dass** die Zusammensetzung die folgenden Komponenten umfasst, bezogen auf Gewichtsprozentanteile:
5 bis 95 Gew.-% des halbaromatischen Polyesters gemäß Anspruch 1;
5 bis 95 Gew.-% eines Additivs und/oder anderer Polymere; und
0 bis 70 Gew.-% eines Verstärkungsmaterials und/oder eines Füllstoffs.

16. Verwendung des halbaromatischen Polyesters gemäß Anspruch 1 bei der Herstellung kompostierbarer Produkte, **dadurch gekennzeichnet, dass** die kompostierbaren Produkte Fasern, Dünnschichten oder Behälter sind.

## Revendications

1. Polyester semi-aromatique, **caractérisé en ce que** ledit polyester semi-aromatique comprend des dérivés formés par les composants suivants :
un premier composant A, par rapport à une quantité de matière totale dudit premier composant A, comprenant :
a1) de 40 à 60 % en moles d'au moins un acide dicarboxylique aliphatique ou de ses dérivés esters ou anhydrides,
a2) de 40 à 60 % en moles d'au moins un acide dicarboxylique aromatique ou de ses dérivés esters ou anhydrides,
a3) de 0 à 5 % en moles d'un composé contenant des groupes sulfonates ;
un deuxième composant B avec au moins une quantité équimolaire par rapport au premier composant A, comprenant des diols ayant de 2 à 12 atomes de carbone ; et
un troisième composant C, par rapport à une quantité de matière totale dudit premier composant A, étant l'un ou plusieurs choisis parmi les composants suivants :
c1) de 0 à 5 % en moles d'un composé contenant au moins 3 groupes hydroxy,
c2) de 0 à 5 % en moles d'un composé dihydroxy contenant un groupe éther,
c3) de 0 à 25 % en moles d'un acide hydroxycarboxylique ou de ses dérivés cycliques, et
c4) de 0 à 25 % en moles d'un aminoalkanol ayant de 2 à 12 atomes de carbone, ou d'un aminocycloalkanol ayant de 2 à 12 atomes de carbone,
c5) de 0 à 25 % en moles d'une diamine ayant de 1 à 12 atomes de carbone, et
c6) de 0 à 15 % en moles d'un composé acide aminocarboxylique,
dans lequel le pourcentage d'au moins un des composants c1) à c6) n'est pas égal à 0, et le total des pourcentages molaires de c1) à c6) est de 100 % ;
dans lequel la longueur moyenne du segment d'une unité répétitive Ba2 dérivée du deuxième composant B et du composant a2 du polyester semi-aromatique, est de 1,85 à 2,25, tel que calculé à l'aide de la RMN ¹H ; et la teneur en groupe carboxyle du polyester semi-aromatique est de 5 à 60 mmol/kg.

2. Polyester semi-aromatique selon la revendication 1, **caractérisé en ce que** dans lequel la longueur moyenne du segment d'une unité répétitive Ba2 dérivée du deuxième composant B et du composant a2 du polyester semi-aromatique, est de 1,87 à 2,0, tel que calculé à l'aide de la RMN ¹H ; et la teneur en groupe carboxyle du polyester semi-aromatique est de 10 à 35 mmol/kg.

3. Polyester semi-aromatique selon la revendication 1, **caractérisé en ce que** la quantité de matière de a2 dans le premier composant A est de 45 à 50 % en moles.

4. Polyester semi-aromatique selon la revendication 1, **caractérisé en ce que** la quantité de matière du troisième composant C est de 0,01 à 4 % en moles, par rapport à la quantité de matière totale dudit premier composant A.

5. Polyester semi-aromatique selon la revendication 1, **caractérisé en ce que** ledit troisième composant C est le glycérol, le pentaérythritol ou le triméthylolpropane.

6. Polyester semi-aromatique selon la revendication 4, **caractérisé en ce que** ledit troisième composant C est le glycérol, le pentaérythritol ou le triméthylolpropane.

7. Polyester semi-aromatique selon la revendication 1, **caractérisé en ce que** ledit polyester semi-aromatique comprend en outre un quatrième composant D, ledit quatrième composant D étant un allongeur de chaîne ; et la quantité de matière du quatrième composant D est de 0,01 à 5 % en moles, par rapport à la quantité de matière totale dudit premier composant A.

8. Polyester semi-aromatique selon la revendication 7, **caractérisé en ce que** ledit allongeur de chaîne est un ou un mélange de plusieurs éléments choisis dans un groupe constitué de isocyanates, isocyanurates, peroxydes, époxydes, oxazolines, oxazines, carbodiimides et polycarbodiimides, qui contiennent deux ou plusieurs groupes fonctionnels.

9. Polyester semi-aromatique selon la revendication 1, **caractérisé en ce que** ledit polyester semi-aromatique comprend des dérivés formés par les composants suivants :
un premier composant A, comprenant :
a1) un acide dicarboxylique aliphatique en C₄-C₁₂ ou ses dérivés esters, et
a2) l'acide téréphtalique ou ses dérivés esters,
un deuxième composant B : le butanediol ou le propanediol ;
un troisième composant C : le glycérol, le pentaérythritol ou le triméthylolpropane ; et
un quatrième composant D : l'hexaméthylène diisocyanate, un époxyde, une oxazoline ou un carbodiimide.

10. Polyester semi-aromatique selon la revendication 1, **caractérisé en ce que** ledit polyester semi-aromatique présente une viscosité de 150 à 350 ml/g, mesurée dans une solution de phénol/o-dichlorobenzène dans un rapport pondéral de 1 : 1 et dans un bain-marie maintenu à 25 ± 0,05 °C conformément à la norme GB/T 17931-1999.

11. Procédé de production du polyester semi-aromatique selon la revendication 1, **caractérisé en ce que** ledit procédé comprend les étapes suivantes consistant à :
S1, mélanger physiquement a1 du premier composant A avec le deuxième composant B et le troisième composant C dans un premier réacteur d'estérification à la température ambiante, et en attendant, mélanger physiquement a2 du premier composant A, le deuxième composant B et le troisième composant C sous l'action d'une partie d'un catalyseur dans un deuxième réacteur d'estérification à la température ambiante, et ensuite chauffer les mélanges séparément à de 150 à 280 °C pour des réactions d'estérification pendant 1 à 2 heures pour obtenir des produits d'estérification Ba1 et Ba2, respectivement ;
S2, mélanger les deux produits d'estérification Ba1 et Ba2, obtenus dans l'étape S1, pour une réaction de polycondensation primaire sous l'action de la quantité restante du catalyseur à une température de réaction de 230 à 270 °C, jusqu'à ce qu'un produit de réaction atteigne une viscosité de 20 à 60 ml/g, mesurée dans une solution de phénol/o-dichlorobenzène dans un rapport pondéral de 1 : 1 et dans un bain-marie maintenu à 25 ± 0,05 °C conformément à la norme GB/T 17931-1999 ; et
S3, transférer le produit de la réaction de polycondensation primaire de l'étape S2 dans un finisseur pour une réaction de polycondensation continue à une température de 220 à 270 °C, jusqu'à ce qu'un produit de réaction atteigne une viscosité de 150 à 350 ml/g, mesurée dans une solution de phénol/o-dichlorobenzène dans un rapport pondéral de 1 : 1 et dans un bain-marie maintenu à 25 ± 0,05 °C conformément à la norme GB/T 17931-1999, et jusqu'à ce que la longueur moyenne du segment de l'unité répétitive Ba2 dérivée du deuxième composant B et du composant a2 dans le produit de réaction, soit de 1,85 à 2,25, et la teneur en groupe carboxyle du produit de réaction est de 5 à 60 mmol/kg, pour obtenir un polyester semi-aromatique.

12. Procédé de production du polyester semi-aromatique selon la revendication 1, **caractérisé en ce que** ledit procédé comprend les étapes suivantes consistant à :
S1, mélanger physiquement une résine de polyester aromatique avec a1 et a3 du premier composant A, le deuxième composant B et le troisième composant C à la température ambiante, et effectuer une réaction de transestérification à 150 à 180 °C pour obtenir un produit d'estérification ;
S2, ajouter un catalyseur au produit d'estérification pour une réaction de polycondensation primaire à une température de 230 à 270 °C, jusqu'à ce que son produit de réaction atteigne une viscosité de 20 à 60 ml/g, mesurée dans une solution de phénol/o-dichlorobenzène dans un rapport pondéral de 1 : 1 et dans un bain-marie maintenu à 25 ± 0,05 °C conformément à la norme GB/T 17931-1999 ; et
S3, transférer le produit de la réaction de polycondensation primaire de l'étape S2 dans un finisseur pour une réaction de polycondensation continue à une température de 220 à 270 °C, jusqu'à ce que son produit de réaction atteigne une viscosité de 150 à 350 ml/g, mesurée dans une solution de phénol/o-dichlorobenzène dans un rapport pondéral de 1 : 1 et dans un bain-marie maintenu à 25 ± 0,05 °C conformément à la norme GB/T 17931-1999, et jusqu'à ce que la longueur moyenne du segment de l'unité répétitive Ba2 dérivée du deuxième composant B et du composant a2 dans le produit de réaction, soit de 1,85 à 2,25, et la teneur en groupe carboxyle du produit de réaction est de 5 à 60 mmol/kg, pour obtenir un polyester semi-aromatique.

13. Procédé de production du polyester semi-aromatique selon la revendication 11, **caractérisé en ce que** dans S3, un quatrième composant D est ajouté pendant la réaction de polycondensation continue, et une extrusion réactive est effectuée avec une extrudeuse à double vis.

14. Procédé de production du polyester semi-aromatique selon la revendication 12, **caractérisé en ce que** dans S3, un quatrième composant D est ajouté pendant la réaction de polycondensation continue, et une extrusion réactive est effectuée avec une extrudeuse à double vis.

15. Composition de moulage en polyester semi-aromatique, **caractérisée en ce que**, par rapport au percentage pondéral, la composition comprend des composants suivants :
de 5 à 95 % en poids du polyester semi-aromatique selon la revendication 1 ;
de 5 à 95 % en poids d'un additif et/ou d'autres polymères ; et
de 0 à 70 % en poids d'un matériau de renforcement et/ou d'une charge.

16. Utilisation du polyester semi-aromatique selon la revendication 1 dans la production de produits compostables, **caractérisée en ce que** lesdits produits compostables sont des fibres, des couches minces, ou des récipients.
